Europäisches Patentamt

European Patent Office

Office européen des brevets

(19)

(11) Veröffentlichungsnummer: **0 197 586**
**B1**

(12) **EUROPÄISCHE PATENTSCHRIFT**

(45) Veröffentlichungstag der Patentschrift:
30.05.90

(21) Anmeldenummer: 86200488.4

(22) Anmeldetag: 21.03.86

(51) Int. Cl.⁵: **C03B 19/04**, C03B 19/06,
C03B 37/012

(54) **Verfahren und Vorrichtungen zur Herstellung von Glaskörpern.**

(30) Priorität: 29.03.85 DE 3511452

(43) Veröffentlichungstag der Anmeldung:
15.10.86 Patentblatt 86/42

(45) Bekanntmachung des Hinweises auf die Patenterteilung:
30.05.90 Patentblatt 90/22

(84) Benannte Vertragsstaaten:
DE FR GB IT NL SE

(56) Entgegenhaltungen:
EP-A- 0 123 191
EP-A- 0 153 619
DE-B- 2 448 363
GB-A- 1 010 702

SPRECHSAAL, Band 114, Nr. 5, Mai 1981,
Seiten 340-434, Coburg; E. ROEDER et al.:
"Strangpressen anorganischer Glasschmelzen-Ein
neues Formge bungsverfahren in der Glastechnologie"

(73) Patentinhaber: **Philips Patentverwaltung GmbH,
Wendenstrasse 35 Postfach 10 51 49,
D-2000 Hamburg 1(DE)**
(84) Benannte Vertragsstaaten: **DE**

(73) Patentinhaber: **N.V. Philips' Gloeilampenfabrieken,
Groenewoudseweg 1, NL-5621 BA Eindhoven(NL)**
(84) Benannte Vertragsstaaten: **FR GB IT NL SE**

(72) Erfinder: **Lersmacher, Bernard, Dr.-Ing., Dipl.-Phys.,
Schlossweiherstrasse 31, D-5100 Aachen(DE)**
Erfinder: **Lydtin, Hans, Dr. Dipl.-Ing., Am
Goepelschacht 9, D-5190 Stolberg(DE)**
Erfinder: **Derks, Pierre Louis Leonard Marie, Dr.,
Kapteinlaan 43, Veldhoven(NL)**

(74) Vertreter: **Nehmzow-David, Fritzi-Maria et al, Philips
Patentverwaltung GmbH
Wendenstrasse 35 Postfach 10 51 49,
D-2000 Hamburg 1(DE)**

## Beschreibung

Die Erfindung betrifft ein Verfahren zur Herstellung von Glaskörpern, bei dem aus dem Ausgangsmaterial für den Glaskörper in Form einer plastischen Masse ein poröser Grünkörper durch Strangpressen geformt, getrocknet und anschließend gereinigt und gesintert wird.

Die Erfindung bezieht sich weiter auf eine Strangpresse zur Durchführung eines solchen Verfahrens mit einem mit einer Austrittsöffnung versehenen Zylinder und einem in diesem bewegbaren Preßstempel.

Das eingangs genannte Verfahren ist insbesondere geeignet zur Herstellung von Stäben und besonders auch Rohren aus Quarzglas, z.B. als Ausgangskörper für optische Wellenleiter.

Optische Wellenleiter werden für eine Vielzahl von Anwendungszwecken eingesetzt, so für Lichtübertragungseinrichtungen kurzer Distanz oder für Lichtübertragungssysteme großer Distanz, wie bei optischen Kommunikationssystemen, und bestehen überwiegend aus einem Glas mit hohem Siliciumdioxidgehalt.

Aus GB-PS 1 010 702 ist ein Verfahren bekannt, bei welchem pulverförmiges reines oder nahezu reines $SiO_2$ mit einem flüssigen Bindemittel in einer Menge von 1 bis 50 Gew.% und gegebenenfalls einem weiteren, den Strangpreßprozeß begünstigenden Gleitmittel in einer Menge von 0,1 bis 10 Gew.%, bezogen auf den $SiO_2$-Anteil, zu einer Strangpreßmasse verarbeitet und über einen Strangpreßprozeß verformt wird. Als flüssige Bindemittel kommen z.B. organische Flüssigkeiten, wie Polyvinylalkohol, oder Wasser in Betracht.

Dieses Verfahren entspricht einer Arbeitsweise der keramischen Technik, bei der aufgemahlene pulverförmige Rohstoffe mit Korndurchmessern > 1 μm mit Wasser, Bindemitteln und Gleitmitteln zu hochviskosen strangpreßfähigen Massen aufbereitet werden.

Beim Verarbeiten von hochdispersen Ausgangspulvern mit Korndurchmessern < 1 μm (die durch übliche Mahlprozesse nicht mehr herstellbar sind), wie sie für die Herstellung von Quarzglaskörpern (insbesondere auch für Vorformen von optischen Wellenleitern) eingesetzt werden, entstehen Probleme beim Mischen bzw. Kneten, besonders dann, wenn die Ausgangsmassen einen hohen Anteil an disperser Phase enthalten, da dann eine wesentlich größere Anzahl von Teilchen gleichmäßig verteilt und eine entsprechend große Oberfläche mit den Zusatzstoffen (Binde- und Gleitmittel) gleichmäßig bedeckt werden muß. So liegen beispielsweise die typischen Misch- und Knetzeiten für eine Ausgangsmasse aus hochdispersen Quarzglasteilchen (10 bis 100 nm Teilchendurchmesser) mit 60 Gew.% $SiO_2$ und 36 Gew.% Wasser (Rest Zusatzstoffe) bei einer bis drei Stunden. Neben diesem hohen Zeitbedarf für die Homogenisierung einer strangpreßfähigen Ausgangsmasse tritt ein weiteres Problem auf: Die zu verarbeitenden plastischen Massen mit $SiO_2$-Glaspulvern als Hauptbestandteil und Wasser als Dispergiermittel erweisen sich als rheologisch äußert komplexe Gebilde, über deren Verhalten im Formgebungsprozeß praktisch keine Voraussage zu machen ist.

Es hat sich gezeigt, daß bereits geringfügige Unterschiede in der Zusammensetzung und Vorbehandlung sowie Lagerung der Massen extrem starke Auswirkungen auf das Verhalten bei der Extrusion haben. Dies sei hier am Beispiel zweier Massen von nahezu identischer Zusammensetzung und Behandlung dargestellt (vergleiche Tabelle I):

## T a b e l l e  I

| Zusammensetzung | Mischung 1 | Mischung 2 |
|---|---|---|
| 1. Hochdisperses $SiO_2$ einer Teilchengröße im Bereich von 10 bis 500 nm | 400 g | 400 g |
| 2. Wasser (Dispergiermittel) (Feststoff : Wasser = 1:2) | 224 g | 222 g |
| 3. Netzmittel | 1,0 g | 0,8 g |
| 4. Gleitmittel (z.B. Stearat) | 25,0 g | 25,0 g |
| 5. Knet- bzw. Homogenisierungszeit t | 4,0 h | 3 h 35 min |
| 6. Gesamtmasse M | 650 g | 647,8 g |
| 7. Produkt M.t=K*) | 2600 | 2332 |

*) Die Zahl K = M.t ist eine willkürlich gewählte Größe, die den Homogenisierungsgrad bezeichnet.

Trotz dieser nahezu gleichen Zusammensetzung und (bis auf die Knetzeit t) nahezu gleiche Vorbehandlung ergaben sich bei der Extrusion erhebliche Unterschiede. Die in der nachfolgenden Tabelle II angegebenen Daten gelten für die Kaltextrusion je eines Stranges aus den beiden Mischungen von ca. 20 cm Länge und 1,6 cm Durchmesser aus einer Strangpreßvorrichtung, wie sie aus dem Stand der Technik bekannt ist.

T a b e l l e    II

| Parameter | Mischung 1 | Mischung 2 |
|---|---|---|
| Austrittskraft $P_0$ | 247 N | 7002 N |
| Endkraft $P_1$ | 2505 N | 25000 N |
| Vorschubgeschwindig- keit des Stranges $\overline{v}$ | 1,9 cm/s | 1,0 cm/s |

$P_0$ in Tabelle II bedeutet die aufgebrachte Minimalkraft, die zum Austritt des Stranges führt, $P_1$ ist die zum quantitativen Auspressen des Stranges erforderliche maximale Kraft.

Während der Extrusion (in der Zeit t=10 s bzw. 20 s) musste die Preßkraft kontinuierlich gesteigert werden.

Dieses stark unterschiedliche Verhalten der beiden Massen deutet darauf hin, daß das Fließ- bzw. Verformungsverhalten demjenigen eines sogenannten strukturviskosen Mediums entspricht. Die mit dem Begriff der Strukturviskosität nach Ostwald verknüpften reversiblen und irreversiblen Vorgänge in plastischen Massen der vorstehend beschriebenen Art sind verantwortlich für die bei der Extrusion auftretenden Probleme.

Der Erfindung liegt die Aufgabe zugrunde, ein Verfahren der eingangs genannten Art und eine Strangpresse der eingangs genannten Art zur Durchführung dieses Verfahrens zu schaffen, mit dem es möglich ist, durch einen Stangpreßprozeß formstabilisierte Grünkörper herzustellen aus Ausgangsmaterial für Glaskörper in Form einer relativ hochviskosen plastischen Preßmasse mit einem Feststoffanteil an hochdispersen Teilchen.

Diese Aufgabe wird erfindungsgemäß dadurch gelöst, daß die plastische Masse, die hochdisperses $SiO_2$-Pulver als Hauptbestandteil und Wasser als Dispergiermittel enthält, unter Ausnutzung des Thixotropieeffektes durch Einkopplung mechanischer Kräfte in einen Zustand erniedrigter Viskosität überführt und in diesem Zustand strangverpreßt wird.

Eine Strangpresse zur Durchführung dieses Verfahrens ist gekennzeichnet durch einen Preßstempel, mit dem ein Schall- oder Ultraschallfeld in eine zu verpressende thixotrope plastische Masse einkoppelbar ist, wobei der Preßstempel vorzugsweise aus einem Schwinger, einem über einen Haltering im Schwingungsknoten an den Schwinger angekoppelten Schwingungsverstärker und einer Sonotrode, über die das Ultraschallfeld in die zu verpressende plastische Masse einkoppelbar ist, besteht.

Der Erfindung liegt die Erkenntnis zugrunde, daß der Thixotropieeffekt bei plastischen Massen mit hochdispersen $SiO_2$-Pulvern als Hauptbestandteil und $H_2O$ als Dispergiermittel dazu ausgenutzt werden kann, die plastische Masse zunächst durch Einwirkung mechanischer Kräfte, vorzugsweise Schall oder Ultraschall, in einen Zustand niedrigerer Viskosität zu überführen, wodurch ein Strangpreßprozeß möglich wird, der einen sehr viel niedrigeren Preßdruck erfordert, als wenn eine rheologisch nicht veränderte Masse zu verpressen wäre.

Es wurde überraschend gefunden, daß hochgefüllte plastische Massen, deren Feststoffanteil überwiegend aus hochdispersen $SiO_2$-Teilchen besteht, praktisch unabhängig von ihrer Zusammensetzung, Vorbehandlung (Misch- und Homogenisierungsprozesse) und Dauer ihrer Lagerung (Exposition an Luft oder sonstiger Atmosphäre - Feuchtraum - ) in einen Zustand mit niedrigerer Viskosität und damit fast unbegrenzter Formbarkeit gebracht werden können, wenn diese Massen mit Schall oder Ultraschall behandelt werden. Dabei zeigte sich weiter, daß die Amplitude und damit die Energie der eingekoppelten Schallwellen die Ausbreitung der von der Sonotrode ausgehenden Erweichungsfront bestimmt. Für einen 1,5 kW-Ultraschallgenerator mit einer Grundfrequenz f = 20 kHz wurde experimentell gefunden, daß eine Verdopplung der Amplitude der Grundschwingung die Ausbreitungsgeschwindigkeit der Erweichungsfront um einen Faktor 3 bis 4 erhöht. Dieser Effekt kann dazu ausgenutzt werden, rohrförmige Körper durch Extrusion durch einen Ringspalt in geeignete Formen hinein oder stabförmige Körper durch Pressen der stark erweichten Massen durch Düsen in entsprechende Behälter hinein herzustellen.

Nach vorteilhaften Weiterbildungen des Verfahrens nach der Erfindung wird als Ausgangsmaterial für den Glaskörper eine plastische Masse eingesetzt, die $SiO_2$-Partikel eines Durchmessers im Bereich von 10 bis 500 nm, vorzugsweise 15 bis 100 nm, mit einem mittleren Teilchendurchmesser von 40 nm enthält, wobei eine plastische Masse mit einem Feststoff:Wasser-Gewichtsverhältnis von 1:1,5 bis 1:1,8 eingesetzt wird. Hiermit ist der Vorteil verbunden, daß aus einem solchen Ausgangsmaterial trotz der relativ hohen Füllung mit hochdispersen Feststoffteilchen sehr homogene, hochverdichtete Grünkörper über einen Strangpreßprozeß hergestellt werden können.

Nach einer weiteren vorteilhaften Ausgestaltung des Verfahrens nach der Erfindung wird die plastische Masse durch Einkopplung eines Schallfeldes mit einer Frequenz f im Bereich von 20 bis 200 Hz oder durch Einkopplung eines Ultraschallfeldes mit einer Frequenz f im Bereich von 20 bis 50 kHz in einen Zustand erniedrigter Viskosität überführt. Eine Gel-Sol-Umwandlung tritt bei thixotropen Systemen bei jeder Art mechanischer Einwirkung, z.B. auch Rühren oder Schütteln, ein. Wird jedoch zur Verflüssigung einer hochviskosen Ausgangsmasse ein Schall- oder Ultraschallschwinger eingesetzt, dessen Amplitude so bemessen ist, daß das Schall- bzw. Ultraschallfeld in das zu verflüssigende Ausgangsmaterial eingekoppelt wird, ergibt sich eine besonders wirkungsvolle Auflösung von Packungshohlräumen im Ausgangsmaterial. Selbst solche Massen, die sich unter stetigem Druck auch bei Anwendung von Preßkräften in der Größenordnung von $3.10^4$ N in üblichen Strangpreßverfahren nicht zu Strängen oder Rohren verpressen ließen, sondern sich völlig verfestigten, erfuhren bei Einwirkung von Schallenergie in praktisch allen Fällen eine mehr oder weniger starke Erweichung.

Hierdurch kann erreicht werden, daß eine strukturviskose Masse mit einem relativ hohen Anteil an hochdispersen Feststoff-Teilchen mit relativ geringem Anpreßdruck in einer Strangpresse verformt werden kann, da sie infolge ihrer Thixotropie durch Einwirkung mechanischer Kräfte quasi schmierfettartige Konsistenz erlangt.

Die mit der Erfindung erzielten Vorteile bestehen insbesondere darin, daß Grünkörper in einem kontinuierlichen Prozeß mit beliebigen Querschnittsformen und auch in großen Längen hergestellt werden können, daß die Herstellung eines Vielkomponentenglases möglich ist und daß die Herstellungseinrichtungen nicht besonders kostspielig sind.

Anhand der Zeichnung werden Ausführungsbeispiele der Erfindung beschrieben und die Erfindung wird in ihrer Wirkungsweise erläutert.

Es zeigen

Fig. 1 Teil einer Strangpresse gemäß der Erfindung im Schnitt (Prinzipskizze)
Fig. 2a und 2d Schnittdarstellungen von Formen, in denen mittels der erfindungsgemäßen Strangpresse rohr- und stabförmige Grünkörper herstellbar sind.

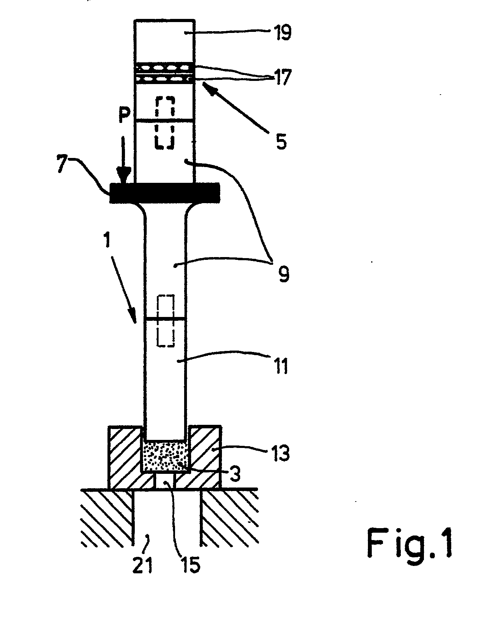

In Fig. 1 ist ein Teil einer Strangpresse mit einem Preßstempel 1 dargestellt. Der Preßstempel 1 ist aus mehreren Vorrichtungsteilen aufgebaut, nämlich aus einem im Ultraschallbereich bei einer Frequenz f von 20 kHz arbeitenden Schwinger 5, einem an einen, der Übertragung des Anpreßdrucks p dienenden Haltering 7 im Schwingungsknoten angekoppelten Schwingungsverstärker 9 und einer Sonotrode 11, über die das Ultraschallfeld in zu verpressende plastische Masse 3 einkoppelbar ist.

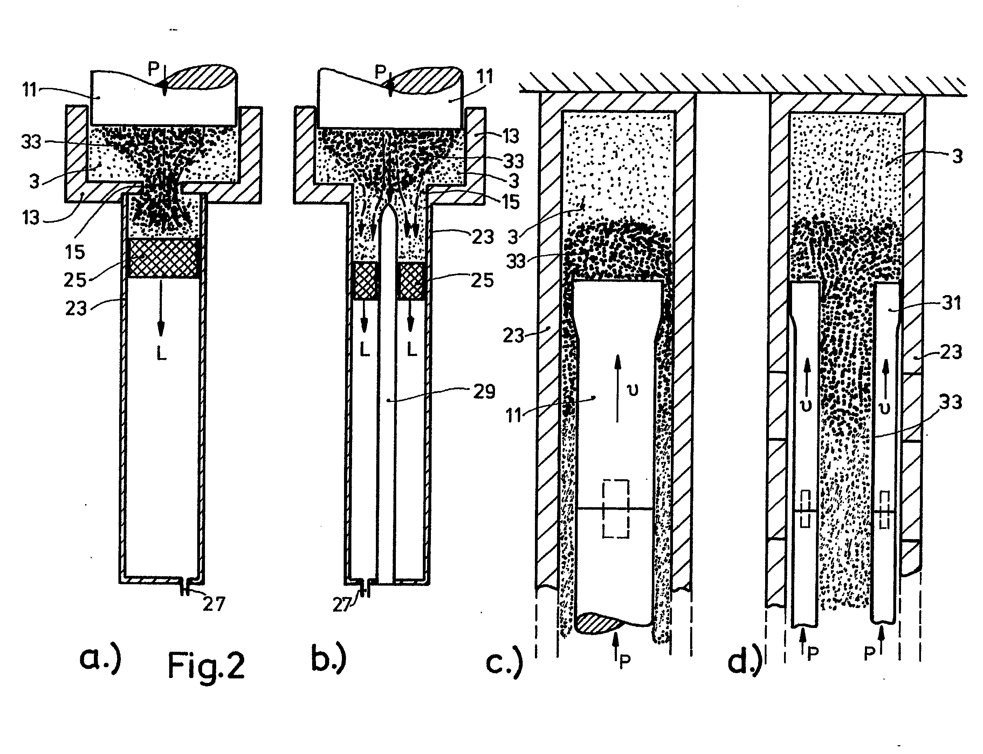

Der Schwinger 5 weist an seiner, dem Haltering 7 gegenüberliegenden Fläche ein Schwingungsdämpfungsteil auf, das aus einem Zwischenstück 17 aus piezoelektrischer Keramik und einem metallischen Reflektor 19 besteht. Die zu verpressende plastische Masse 3 befindet sich in einer Matrize 13, die eine Austrittsöffnung 15 aufweist. Der Preßstempel 1 mit seiner Sonotrode 11 ist in die Matrize 13 gleitfähig eng eingepaßt. Bei Vorschub des Stempels 1 unter einem Druck p tritt die plastische Masse 3 mit ihrem durch Einwirkung von Ultraschall in einen Zustand erniedrigter Viskosität überführten Anteil 33 über die Austrittsöffnung 15 in eine in einer Aufnahme 21 angeordnete zylindrische Form 23 (vergleiche Figuren 2a und 2b) ein.

In die Form 23 ist ein federnder zylindrischer Schwebekörper 25 gleitfähig eng eingepaßt, der auf einem Luftpolster L ruht und der sich bei Vorschub des Preßstempels 1 in Richtung auf eine Luftaustrittsöffnung 27 am unteren Ende der verschlossenen Form 23 verschiebt. Durch Regelung des Luftaustritts an der Luftaustrittsöffnung 27 läßt sich eine Gegenkraft in der Form 23 aufbauen, die eine Kompensation des Eigengewichtes der extrudierten Masse 33 ermöglicht und dadurch ein Arbreißen des geformten Preßlings in Form eines Vollzylinders verhindert. In Fig. 2b ist in der form 23 ein Kern 29 zentrisch angeordnet, der das Auspressen von rohrförmigen Grünkörpern ermöglicht. Für diesen Fall ist der Schwebekörper 25 hohlzylinderförmig ausgebildet und umschließt den Kern 29 gleitfähig eng.

In den Figuren 2c und 2d ist eine Form 23 dargestellt, die die Herstellung langer Stäbe (Figur 2c) und langer Rohre (Figur 2d) ermöglicht. In dieser Anordnung ist die Sonotrode als Vollzylinder (Sonotrode 11) zur Herstellung von Rohren oder als Hohlzylinder (Sonotrode 31) zur Herstellung von Stäben ausgebildet.

Im Umfeld der Kontaktfläche der Sonotrode 11, 31 entsteht in der zu verpressenden Masse 3 ein Masseanteil 33, der eine gegenüber der Masse 3 erniedrigte Viskosität aufweist. Bei Vorschub der Sonotrode 11, 31 mit einer Vorschubgeschwindigkeit ϑ in Pfeilrichtung kann die niedrigerviskose Masse 33 in den Raum zwischen der Wandung der Form 23 und der Sonotrode 11 einströmen.

Wird, wie in Figur 2d dargestellt, eine als Hohlzylinder ausgebildete Sonotrode 31 eingesetzt, die gleitfähig eng in die Form 23 eingepaßt ist, kann die niedrigervoskose Masse 33 bei einer Vorschubgeschwindigkeit ϑ in Pfeilrichtung in den Innenraum der Sonotrode 31 einströmen und es wird ein stabförmiger Grünkörper erhalten. Die Form 23 wird zweckmäßigerweise aus lösbaren, abnehmbaren Rohrteilen zusammengesetzt, die nach Austreten des verformten Preßlings zur Verminderung der Wandreibung entfernt werden können.

In praktischen Ausführungsbeispielen wurden zu verpressende Massen hergestellt, wie sie in Tabelle I angegeben sind. Infolge unterschiedlicher Mischbehandlung und relativ langer Lagerung unter vermindertem Luftzutritt (bis zu 20 Tagen) zeigten die Massen eine sehr starke Verfestigung (hart, bröckelnd). Die Massen ließen sich in einer normalen Extrusionsanlage nicht extrudieren, sondern verfestigten sich noch stärker. Die dabei applizierten Kräfte bzw. Drücke am Düsenaustritt (Durchmesser des Düsenaustritts 1,6 cm) betrugen bis zu $p_{max} = 30000$ N (= $p \approx 1,5.10^8$ Pa $\triangleq 1,5.10^3$ bar). Die gleichen Massen wurden dann in der erfindungsgemäßen Strangpresse entsprechend Figur 1 einer Schallbehandlung unter folgenden Bedingungen unterzogen: eine Menge von etwa 50 cm³ der jeweiligen Masse wurde in den Füllraum der Matrize (Durchmesser 5 cm) etwa 3 cm hoch eingefüllt. Die Sonotrode eines Ultraschallgenerators für 20 kHz mit einer maximalen Schalleistung $N_s = 1,5$ kW (Wirkungsgrad 90%) wurde dann auf die Masse mit einem Anpreßdruck von $p \approx 5.10^5$ Pa $\triangleq 5$ bar aufgesetzt. Die Schwingungsamplitude der Sonotrode wurde auf 7 µm eingestellt und die Masse unter diesen Bedingungen etwa 20 s lang beschallt. Die beschallte Masse erweichte in unmittelbarer Umgebung der Kontaktfläche am Sonotrodenboden zu schmierfettartiger Konsistenz. Unter dem Anpreßdruck p wanderte die Erweichungsfront in ca. 20 s, also mit einer mittleren Ausbreitungsgeschwindigkeit $\bar{v} \approx 1,5$ mm/s durch die Füllmenge hindurch bis zur Austrittsöffnung an der Matrize; die Austrittsöffnung hatte einen Durchmesser von 8 mm; an der Austrittsöffnung trat eine Gesamtmenge an Masse mit erniedrigter Viskosität von ca. 1,5 cm³ in Form eines etwa 3 cm langen Stranges aus.

In einem weiteren Ausführungsbeispiel wurde - unter Beibehaltung aller für das obige Beispiel genannten übrigen Parameter - die Schwingungsamplitude des Ultraschallgenerators auf 15 µm eingestellt. Unter diesen Bedingungen wanderte die Erweichungsfront in der zu verpressenden Masse nun mit einer Ausbreitungsgeschwindigkeit $\bar{v} \approx 4$ bis 6 mm/s durch die eingefüllte Masse, die praktisch quantitativ in der erwähnten schmierfettartigen Konsistenz durch die Austrittsöffnung der Matrize ausgepreßt wurde.

Die auf die beschriebene Weise strangverpreßten Grünkörper wiesen eine Dichte von $\approx 50$ % der Dichte kompakten Quarzglases auf und waren porös, so daß nach ihrer Trocknung in einer nachfolgenden Reinigungspase in einer erhitzen Chlorgas enthaltenden Gasatmosphäre bei hoher Temperatur störende Verunreinigungen, insbesondere OH-Ionen und Ionen oder Teilchen der Übergangsmetalle weitgehend entfernt werden können. Der gereinigte Grünkörper wurde anschließend dichtgesintert. Der hergestellte Glaskörper hatte eine Dichte von 2,20 g/cm³ und war blasen- und schlierenfrei.

Gläser, die für optische Wellenleiter geeignet sind, sind ebenfalls mit Vorteil verwendbar für die Herstellung von Lampenkolben für Halogen- oder Gasentladungslampen, denn diese Gläser müssen, ebenso wie die Gläser für optische Wellenleiter, nahezu wasserfrei sein und einen hohen Siliciumdioxidgehalt aufweisen.

Bezugszeichenliste

1 Preßstempel
3 Plastische Masse
5 Schwinger
7 Haltering
9 Schwingungsverstärker
11 Sonotrode
13 Matrize
15 Austrittsöffnung
17 Zwischenstück
19 Reflektor
21 Aufnahme für 23
23 Zylindrische Form
25 Schwebekörper
27 Luftaustrittsöffnung in 23
29 Kern in 23
31 Hohlzylinderförmige Sonotrode
33 Plastische Masse mit erniedrigter Viskosität

**Patentansprüche**

1. Verfahren zur Herstellung von Glaskörpern, bei dem aus dem Ausgangsmaterial für den Glaskörper in Form einer plastischen Masse ein poröser Grünkörper durch Strangpressen geformt, getrocknet und anschließend gereinigt und gesintert wird, dadurch gekennzeichnet, daß die plastische Masse, die hochdisperses $SiO_2$-Pulver als Hauptbestandteil und Wasser als Dispergiermittel enthält, unter Ausnutzung des Thixotropieeffektes durch Einkopplung mechanischer Kräfte in einen Zustand erniedrigter Viskosität überführt und in diesem Zustand strangverpreßt wird.

2. Verfahren nach Anspruch 1, dadurch gekennzeichnet, daß als Ausgangsmaterial für den Glaskörper eine plastische Masse eingesetzt wird, die SiO₂-Partikel eines Durchmessers im Bereich von 10 bis 500 nm, vorzugsweise 15 bis 100 nm mit einem mittleren Teilchendurchmesser von 40 nm enthält.

3. Verfahren nach Anspruch 1 oder 2, dadurch gekennzeichnet, daß eine plastische Masse mit einem Feststoff:Wasser-Gewichtsverhältnis von 1:1, 5 bis 1:1,8 eingesetzt wird.

4. Verfahren nach einem der Ansprüche 1 bis 3, dadurch gekennzeichnet, daß die plastische Masse durch Einkopplung eines Schallfeldes mit einer Frequenz f im Bereich von 20 bis 200 Hz oder durch Einkopplung eines Ultraschallfeldes mit einer Frequenz f im Bereich von 20 bis 50 kHz in einen Zustand erniedrigter Viskosität überführt wird.

5. Verfahren nach einem der Ansprüche 1 bis 4, dadurch gekennzeichnet, daß die plastische Masse in einer Strangpresse mit einem Preßstempel in Form einer Sonotrode eines Schall- oder Ultraschallgenerators mit einem Anpreßdruck p im Bereich von 1 bis 7.10⁵ Pa bei einer Schwingungsamplitude der Sonotrode im Bereich von 0 bis 60 µm verpreßt wird.

6. Strangpresse zur Durchführung des Verfahrens nach den Ansprüchen 1 bis 5 mit einem mit einer Austrittsöffnung versehenen Zylinder und einem in diesem bewegbaren Preßstempel, gekennzeichnet durch einen Preßstempel (1), mit dem ein Schall- oder Ultraschallfeld in eine zu verpressende thixotrope plastische Masse (3, 33) einkoppelbar ist.

7. Strangpresse nach Anspruch 6, dadurch gekennzeichnet, daß der Preßstempel (1) aus einem Schwinger (5), einem an einen, der Übertragung des Anpreßdrucks p dienenden Haltering (7) im Schwingungsknoten angekoppelten Schwingungsverstärker (9) und einer Sonotrode (11,31), über die das Ultraschallfeld in die zu verpressende plastische Masse (3,33) einkoppelbar ist, besteht.

8. Strangpresse nach Anspruch 7, dadurch gekennzeichnet, daß der Schwinger (5) an seiner, dem Haltering (7) gegenüberliegenden Fläche ein Schwingungsdämpfungsteil aufweist, bestehend aus einem Zwischenstück (17) aus piezoelektrischer Keramik und einem metallischen Reflektor (19), über den der Anpreßdruck p auf den Preßstempel (1) übertragbar ist.

9. Strangpresse nach einem der Ansprüche 6 bis 8, dadurch gekennzeichnet, daß der Preßstempel (1) mit seiner Sonotrode (11) in eine Matrize (13) mit einer Austrittsöffnung (15) gleitfähig eng eingepaßt ist, wobei die zu verpressende Masse (3,33) bei Vorschub des Stempels unter einem Anpreßdruck p über die Austrittsöffnung in eine unterhalb der Austrittsöffnung in einer Aufnahme (21) angeordnete, der Form des herzustellenden Glaskörpers entsprechende Form (23) gelangt.

10. Vorrichtung nach Anspruch 9, dadurch gekennzeichnet, daß in der Form (23) ein federnd angeordneter Schwebekörper (25) vorgesehen ist.

11. Vorrichtung nach Anspruch 10, dadurch gekennzeichnet, daß die Form (23) ein Hohlzylinder ist und daß der Schwebekörper (25) zylinderförmig ausgebildet und gleitfähig eng in die Form (23) eingepaßt ist.

12. Vorrichtung nach einem der Ansprüche 9 bis 11, dadurch gekennzeichnet, daß die Form (23) ein Hohlzylinder ist und daß in der Form (23) ein zentrisch angeordneter Kern (29) vorgesehen ist.

13. Vorrichtung nach Anspruch 12, dadurch gekennzeichnet, daß der Schwebekörper (25) gleitfähig eng in die Form (23) eingepaßt und hohlzylinderförmig ausgebildet ist und den Kern (29) gleitfähig eng umschließt.

14. Vorrichtung nach einem der Ansprüche 9 bis 13, dadurch gekennzeichnet, daß die Form (23) mit einer Luftaustrittsöffnung (27) an ihrem unteren, der Sonotrode (11) gegenüberliegenden Ende versehen ist.

15. Vorrichtung nach einem der Ansprüche 6 bis 8, dadurch gekennzeichnet, daß eine zylindrische verschlossene Form (23) vorgesehen ist, in die zu verpressende plastische Masse (3,33) aufgenommen ist und in die der Preßstempel (1) mit seiner Sonotrode (11) so eingepaßt ist, daß ein rohrförmiger Preßling bei Vorschub des Preßstempels unter einem Anpreßdruck p zwischen der Wandung der Form und dem Preßstempel entgegen der Vorschubrichtung des Preßstempels austritt.

16. Vorrichtung nach Anspruch 15, dadurch gekennzeichnet, daß der Preßstempel (1) mit einer als Hohlzylinder ausgebildeten Sonotrode (31) versehen ist, die gleitfähig eng in die Form (23) eingepaßt ist, so daß ein stabförmiger Preßling bei Vorschub des Preßstempels unter einem Anpreßdruck p über den Innenraum der Sonotrode entgegen der Vorschubrichtung des Preßstempels austritt.

17. Verfahren nach den Ansprüchen 1 bis 5, dadurch gekennzeichnet, daß die hergestellten Glaskörper als Vorform für optische Wellenleiter eingesetzt werden.

18. Verfahren nach den Ansprüchen 1 bis 5, dadurch gekennzeichnet, daß die hergestellten Glaskörper als Lampenkolben, insbesondere für Halogen- und Gasentladungslampen, eingesetzt werden.

**Claims**

1. Method for the manufacture of glass bodies, in which a porous green body is formed by extrusion from the starting material for the glass body in the form of a plastic mass and this green body is dried and subsequently purified and sintered, characterized in that the plastic mass, which comprises highly disperse DiO₂ powder as the main constituent and water as the dispersing agent, is transferred to a state of reduced viscosity utilizing the thixotropic effect and the action of mechanical forces, in which state said plastic mass is extruded.

2. Method as claimed in Claim 1, characterized in that the starting material for the glass body is a plastic mass which contains $SiO_2$ particles having a diameter in the range from 10 to 500 nm, preferably 15 to 100 nm, with an average particle diameter of 40 nm.

3. Method as claimed in Claim 1 or 2, characterized in that a plastic mass with a solids:water weight ratio of 1:1.5 to 1:1.8 is used.

4. Method as claimed in any one of the Claims 1 up to and including 3, characterized in that the plastic mass is transferred to a state of reduced viscosity by the introduction of a sound field with a frequency f in the range from 20 to 200 Hz or by the introduction of an ultrasound field with a frequency f in the range from 20 to 50 kHz.

5. Method as claimed in any one of the Claims 1 up to and including 4, characterized in that the plastic mass is extruded in an extruding press with a ram in the form of a sonotrode of a sonic or ultrasonic generator with a pressure p in the range from 1 to $7.10^5$ Pa and an oscillation amplitude of the sonotrode in the range from 0 to 60 μm.

6. Extruding for the execution of the method as claimed in Claims 1 up to and including 5, comprising a cylinder having an outlet aperture and a ram which can move in said cylinder, characterized by a ram (1) which can be used to introduce a sound or ultrasound field into a thixotropic plastic mass (3, 33) to be extruded.

7. Extruding press as claimed in Claim 6, characterized in that the ram (1) consists of a resonator (5), an oscillation amplifier (9) coupled at the oscillation node to a supporting ring (7) which serves to transfer the pressure p and a sonotrode (11, 31) by means of which the ultrasound field can be introduced into the plastic mass (3, 33) to be extruded.

8. Extruding press as claimed in Claim 7, characterized in that on the surface lying opposite the supporting ring (7) the resonator (5) has an oscillation-damping unit comprising a spacer (17) of piezoelectric ceramic and a metallic reflector (19) by means of which the pressure p can be transferred to the ram (1).

9. Extruding press as claimed in any one of the Claims 6 up to and including 8, characterized in that the ram (1) with its sonotrode (11) is inserted with a sliding fit into a die (13) with an outlet aperture (15), and, when the ram advances under a pressure p, the mass to be extruded (3, 33) passes through the outlet aperture into a mould (23), corresponding to the shape of the glass body to be produced, arranged in a holder (21) below the outlet aperture.

10. Device as claimed in Claim 9, characterized in that a spring-mounted floating element (25) is provided in the mould (23).

11. Device as claimed in Claim 10, characterized in that the mould (23) is a hollow cylinder and the floating element (25) is cylindrical in shape and is inserted with a sliding fit into the mould (23).

12. Device as claimed in any one of the Claims 9 up to and including 11, characterized in that the mould (23) is a hollow cylinder and a centrally arranged core (29) is provided in the mould (23).

13. Device as claimed in Claim 12, characterized in that the floating element (25) is inserted into the mould (23) with a sliding fit and is in the shape of a hollow cylinder and encloses the core (29) with a sliding fit.

14. Device as claimed in any one of the Claims 9 up to and including 13, characterized in that the mould (23) is equipped with an air-outlet aperture (27) and its bottom end lying opposite the sonotrode (11).

15. Device as claimed in any one of Claims 6 up to and including 8, characterized in that a cylindrical closed mould (23) is provided which holds the plastic mass to be extruded (3, 33) and in which the ram (1) with its sonotrode (11) is fitted in such a way that, when the ram is advanced under a pressure p, a tube-shaped moulding emerges between the wall of the mould and the ram in the direction opposite to the direction of movement of the ram.

16. Device as claimed in Claim 15, characterized in that the ram (1) is provided with a sonotrode (31), in the form of a hollow cylinder, which is inserted into the mould (23) with a sliding fit, so that, when the ram is advanced under a pressure p, a rod-shaped moulding emerges via the inside of the sonotrode in the direction opposite to the direction of movement of the ram.

17. A method as claimed in Claims 1 up to and including 5, characterized in that the glass bodies manufactured are used as preforms for optical waveguides.

18. A method as claimed in Claims 1 up to and including 5, characterized in that the glass bodies manufactured are used as lamp envelopes, especially for halogen and gas discharge lamps.


**Revendications**

1. Procédé pour la fabrication de corps en verre, selon lequel un semi-produit poreux est formé à partir du matériau de départ pour les corps en verre sous forme d'une masse plastique par extrusion, séché et ensuite nettoyé et fritté, caractérisé en ce que la masse plastique contenant de la poudre très dispersée de $SiO_2$ comme composant principal et de l'eau comme dispersant est transformée, par mise à profit de l'effet de thixotropie par couplage de forces mécaniques, en un état de viscosité réduite et extrudé dans cet état.

2. Procédé selon la revendication 1, caractérisé en ce que comme matériau de départ pour le corps en verre on utilise une masse plastique contenant des particules de $SiO_2$ d'un diamètre compris entre 10 et 500 nm, de préférence 15 à 100 nm, le diamètre moyen des particules étant de 40 nm.

3. Procédé selon la revendication 1 ou 2, caractérisé par l'utilisation d'une masse plastique dans un rapport en poids matière solide : eau de 1 : 1,5 à 1 : 1,8.

4. Procédé selon l'une des revendications 1 à 3, caractérisé en ce que la masse plastique est transformée dans un état de viscosité réduite par couplage du champ sonore d'une fréquence f dans la gamme de 20 à 200 Hz ou par couplage d'un champ ultrasonore d'une fréquence f dans la gamme de 20 à 50 kHz.

5. Procédé selon l'une des revendications 1 à 4, caractérisé en ce que la masse plastique est transformée dans une extrudeuse à l'aide d'un poinçon sous forme d'une sonotrode d'un générateur de sons ou d'ultrasons sous une pression d'application p dans la gamme de 1 à $7.10^5$ Pa à une amplitude d'oscillation de la sonotrode comprise entre 0 et 60 µm.

6. Extrudeuse pour la mise en œuvre du procédé selon la revendication 1 à 5 comportant un cylindre muni d'un orifice de sortie et d'un poinçon pouvant être déplacé dans le cylindre, caractérisée par un poinçon (1) à l'aide duquel un champ sonore ou ultrasonore peut être couplé dans une masse plastique thixotrope à comprimer (3, 33).

7. Extrudeuse selon la revendication 6, caractérisée en ce que le poinçon (1) est constitué par un oscillateur (5), un amplificateur d'oscillation (9) couplé au nœud d'oscillation à l'anneau de support (7) servant à la transmission de la pression d'application p et une sonotrode (11, 31) par l'intermédiaire de laquelle le champ ultrasonore peut être couplé dans la masse plastique à comprimer (3, 33).

8. Extrudeuse selon la revendication 7, caractérisée qu'à sa face opposée à l'anneau de support (7), l'oscillateur (5) présente une partie d'amortissement d'oscillation constituée par une pièce intermédiaire (17) en matière céramique piézo-électrique et un réflecteur métallique (19), par l'intermédiaire de laquelle la pression d'application p peut être transmise au poinçon (1).

9. Extrudeuse selon l'une des revendications 6 à 8, caractérisé en ce que le poinçon (1) muni de la sonotrode (11) s'emboîte étroitement et de façon à pouvoir coulisser dans une matrice (13) munie d'une orifice de sortie (15), la masse à comprimer (3, 33) parvenant, lors de l'avancement du poinçon sous une pression d'application p par l'intermédiaire de l'orifice de sortie dans une forme (23) correspondant à la forme du corps en verre à réaliser et disposée au-dessous de l'orifice de sortie.

10. Dispositif selon la revendication 9, caractérisé en ce que dans la forme (23) est prévu un corps suspendu (25) disposé de façon élastique.

11. Dispositif selon la revendication 10, caractérisé en ce que la forme (23) est un cylindre creux et le corps suspendu (25) est sous forme d'un cylindre et s'emboîte étroitement et de façon à coulisser dans la forme (23).

12. Dispositif selon l'une des revendications 9 à 11, caractérisé en ce que la forme (23) est un cylindre creux et dans la forme (23) est prévu un noyau (29) qui est disposé de façon centrique.

13. Dispositif selon la revendication 12, caractérisé en ce que le corps suspendu (25) s'emboîte étroitement et de façon à pouvoir coulisser dans la forme (23) et est sous forme d'un cylindre creux et enferme étroitement et de façon à pouvoir coulisser le noyau (29).

14. Dispositif selon l'une des revendications 9 à 13, caractérisé en ce que la forme (23) est munie d'un office de sortie d'air (27) à l'extrémité inférieure située à l'opposé de la sonotrode (11).

15. Dispositif selon l'une des revendications 6 à 8, caractérisé en ce qu'une forme fermée cylindrique est prévu, qui contient la masse plastique à comprimer et dans laquelle s'emboîte le poinçon 1 muni de la sonotrode 11 de façon que lors de l'avancement du poinçon sous une pression d'application p, une pièce moulée tubulaire sorte entre la paroi de la forme et le poinçon dans le sens opposé à celui de l'avancement du poinçon.

16. Dispositif selon la revendication 15, caractérisé en ce que le poinçon 1 est muni d'une sonotrode 31 sous forme d'un cylindre creux qui s'emboîte étroitement et de façon à pouvoir coulisser dans la forme 23 de façon que, lors de l'avancement du poinçon sous une pression d'application p, une pièce moulée en forme de barre sorte par l'intermédiaire de l'espace intérieur de la sonotrode dans le sens opposé à celui de l'avancement du poinçon.

17. Procédé selon les revendications 1 à 5, caractérisé en ce que le corps en verre fabriqué peut être utilisé comme préforme pour des guides d'ondes optiques.

18. Procédé selon les revendications 1 à 5, caractérisé en ce que le corps en verre réalisé peut être utilisé comme ampoule pour des lampes notamment des lampes à décharge dans le gaz et à l'halogène.

Fig.1

a.) Fig.2 b.) c.) d.)

EP 0 197 586 B1